(19) Europäisches Patentamt
European Patent Office
Office européen des brevets

(11) **EP 0 963 064 B1**

(12) **FASCICULE DE BREVET EUROPEEN**

(45) Date de publication et mention
de la délivrance du brevet:
**21.11.2001 Bulletin 2001/47**

(51) Int Cl.7: **H04B 10/12**, H04L 9/00

(21) Numéro de dépôt: **99401293.8**

(22) Date de dépôt: **31.05.1999**

(54) **Dispositif pour l'émission ou la réception d'un signal crypté par chaos déterministe**

Anordnung zum Senden und Empfangen eines auf Basis von deterministischem Chaos
verschlüsselten Signals

Transmission and reception apparatus of a signal encrypted based on deterministic chaos

(84) Etats contractants désignés:
**DE GB**

(30) Priorité: **02.06.1998 FR 9806892**

(43) Date de publication de la demande:
**08.12.1999 Bulletin 1999/49**

(73) Titulaire: **FRANCE TELECOM**
**75015 Paris (FR)**

(72) Inventeurs:
• **Goedgebuer, Jean-Pierre**
**25115 Pouilley les Vignes (FR)**
• **Larger, Laurent**
**25000 Besancon (FR)**
• **Merolla, Jean-Marc**
**25600 Nommay (FR)**

(74) Mandataire: **Texier, Christian et al**
**Cabinet Régimbeau**
**20, rue de Chazelles**
**75847 Paris cedex 17 (FR)**

(56) Documents cités:
**FR-A- 2 743 459**

• **FIELLEMANS A: "BASIC SCIENCE" IEEE SPECTRUM, vol. 35, no. 1, janvier 1998 (1998-01), pages 100-103, XP000768517**
• **ANNOVAZZI-LODI V ET AL: "SYNCHRONIZATION OF CHAOTIC LASERS BY OPTICAL FEEDBACK FOR CRYPTOGRAPHIC APPLICATIONS" IEEE JOURNAL OF QUANTUM ELECTRONICS, vol. 33, no. 9, septembre 1997 (1997-09), pages 1449-1454, XP000698852**
• **CELKA P: "CHAOTIC SYNCHRONIZATION AND MODULATION OF NONLINEAR TIME-DELAYED FEEDBACK OPTICAL SYSTEMS" IEEE TRANSACTIONS ON CIRCUITS AND SYSTEMS I: FUNDAMENTAL THEORY AND APPLICATIONS, vol. 42, no. 8, 1 août 1995 (1995-08-01), pages 455-463, XP000526247**
• **"CHAOS-BASED LASERS MAY YIELD SECURE COMMUNICATIONS" MACHINE DESIGN, vol. 67, no. 13, 27 juillet 1995 (1995-07-27), page 20 XP000530353**

**Description**

La présente invention est relative aux transmissions mettant en oeuvre un cryptage par chaos déterministe.

L'invention trouve notamment avantageusement application pour la transmission confidentielle d'informations dans des réseaux optiques.

Elle trouve également application dans le domaine des hyperfréquences, pour le cryptage de radiocommunications.

Dans le cryptage par chaos, le message est caché dans un signal chaotique, c'est-à-dire dans un signal qui fluctue de façon aléatoire mais déterministe. L'expéditeur du message possède un générateur de chaos qui permet de masquer le message en clair dans un signal chaotique. Le destinataire possède un autre générateur de chaos qui doit être synchronisé sur le premier pour pouvoir décrypter correctement le message.

Les générateurs de chaos parmi les plus intéressants pour être utilisés pour le cryptage sont les dispositifs appelés "systèmes non linéaires à retard". Ils sont constitués par une source lumineuse munie d'une boucle de contre-réaction formée d'un élément non linéaire et d'une ligne à retard.

Ils présentent l'avantage d'être simples tout en produisant des chaos de très grandes dimensions, c'est-à-dire très complexes, ce qui permet d'obtenir une confidentialité très élevée.

Le problème posé par ce type de générateurs de chaos est qu'il faut arriver à synchroniser l'émetteur et le récepteur pour pouvoir décrypter en temps réel le message. Très peu de réalisations ont été décrites jusqu'à présent dans le domaine optique.

Le brevet FR 2 743 459 décrit ainsi un système de cryptage utilisant comme émetteur un générateur de chaos formé d'une source accordable en longueur d'onde et d'un composant non linéaire en longueur d'onde. Le dispositif permet de crypter un message sous forme d'une modulation chaotique de la longueur d'onde émise par la source lumineuse. Ce document rapporte que les opérations de cryptage et de décryptage effectuées par l'émetteur et le récepteur s'effectuent alors grâce notamment à l'utilisation d'éléments non linéaires en longueur d'onde qui doivent être identiques dans l'émetteur et le récepteur.

Ce procédé présente l'avantage d'être de réalisation simple mais est difficilement utilisable sur de grandes distances (c'est-à-dire pour les systèmes utilisant des fibres optiques) car il est nécessaire de conserver les mêmes non linéarités en longueur d'onde entre l'émetteur et le destinataire sur toute la distance.

Cette condition n'est pas remplie quand le canal de transmission est une fibre optique standard. Celle-ci introduit en effet des effets de dispersion chromatique qui affectent les longueurs d'ondes transmises entre l'émetteur et le destinataire, ce qui rend difficile l'obtention des conditions permettant au destinataire de décrypter le message.

La solution pour produire un chaos utilisable pour les grandes distances et s'affranchir des problèmes de dispersion est d'utiliser un générateur de chaos produisant une modulation chaotique de l'intensité lumineuse d'une source monochromatique. Les dispositifs actuellement connus, appelés par la suite "générateurs de chaos en intensité", ne sont toutefois pas utilisables dans le procédé de cryptage et de décryptage décrit dans le brevet déjà cité FR 2 743 459 pour les raisons qui vont être maintenant expliquées.

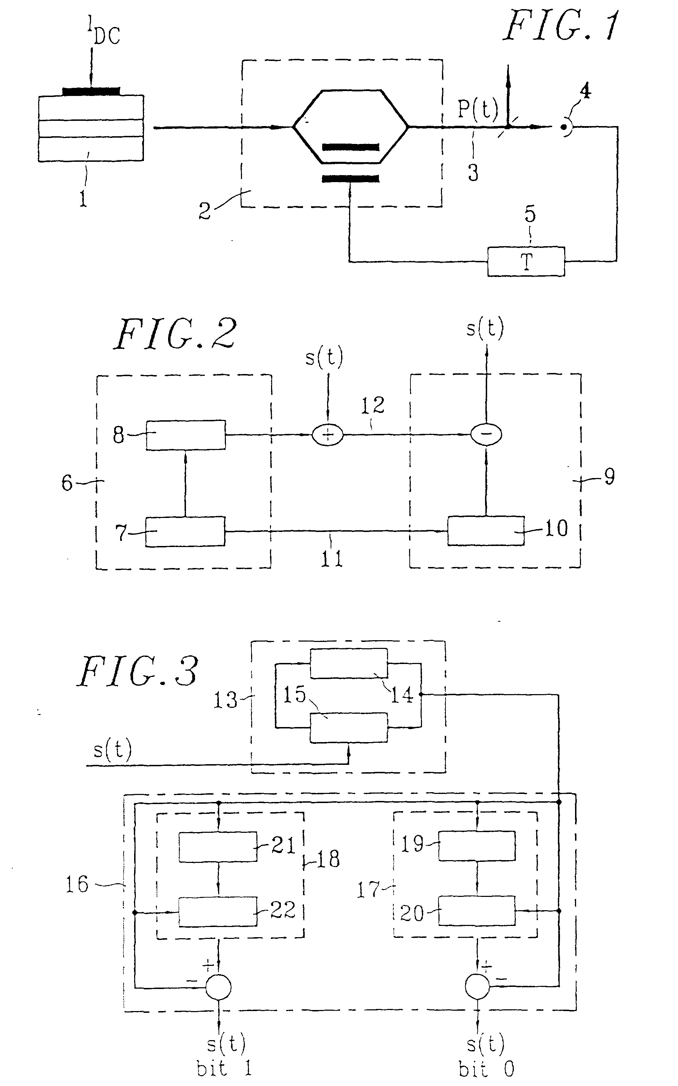

La figure 1 représente ainsi un générateur de chaos en intensité qui a pour effet de produire une modulation chaotique de l'intensité lumineuse de la source monochromatique 1, selon le mode de réalisation décrit par P. Celka dans un article intitulé "chaotic synchronization and modulation of nonlinear time-delayed feedback optical systems", IEEE Transactions on Circuits and Systems, 42, 8, pp 455-463, 1995. La source 1 est reliée optiquement à une interféromètre de Mach-Zehnder intégré 2 dont l'intensité de sortie P(t) 3 est convertie par le photodétecteur 4 en un signal électrique rebouclé sur les électrodes de commande de l'interféromètre, après passage dans une ligne à retard T 5. On pourra se reporter également aux documents suivants dans lesquels l'élément non linéaire en énergie est un cristal électro-optique, un cristal acousto-optique, un interféromètre de Michelson ou de Fabry-Pérot

. F.A. Hopf, D.L. Kaplan, H.M. Gibbs,R.L. Shoemaker "bifurcation to chaos in optical bistability", Phys. Rev. A, 25, 4 pp 2172-2182, 1982 ;
. R. Vallée, C. Delisle "route to chaos in an acousto-optic bistable device", Phys. Rev. A, 31, 4 pp 2390-2396, 1985 ;
. Y. Liu, J. Ohtsubo "chaos in an active interferometer", J. Opt. Soc. Am. B, 9, 2, pp 261-265, 1992 ;
. T. Takizawa, T. Liu, J. Ohtsubo, "chaos in a feedback Fabry-Pérot interferometer", IEEE J. of Quantum Electronics, 30, 2, pp 334-338, 1994.

Dans tous ces systèmes, l'élément non linéaire induit une non linéarité en énergie directement sur la lumière issue de la source, et le signal chaotique lumineux ainsi obtenu est rebouclé, après conversion photo-électrique, par une boucle de contre-réaction à retard sur la source ou sur les électrodes de l'élément non linéaire. La loi d'évolution du chaos en intensité produit par l'ensemble de ces systèmes est toutefois différente de celle du chaos sur lequel repose le procédé de cryptage décrit dans le brevet déjà cité, ce qui ne permet pas de le transposer à ces systèmes.

Ainsi dans le cas de la figure 1, l'intensité lumineuse P(t) émise par l'émetteur est régie par les équations

suivantes :

$$P(t) = P_0 \left[ 1 + \cos \frac{2\pi}{\lambda} V(t-T) \right] \text{ et } V(t) + \tau \frac{d}{dt} V(t) = \eta P(t)$$

où $V(t)$ est le signal électrique produit par le photodétecteur, $\eta$ son gain électrique, $\tau$ la constante de temps de la boucle de contre-réaction et $\lambda$ la longueur d'onde de la source.

Ces deux équations peuvent être regroupées sous la forme de l'équation différentielle non linéaire à retard suivante qui régit la loi d'évolution du chaos en intensité $P(t)$ produit à la sortie 3 de l'interféromètre :

$$\frac{\lambda}{2\pi} \cos^{-1} \left[ \frac{P(t)}{P_0} - 1 \right] + \tau \frac{d}{dt} \cos^{-1} \left[ \frac{P(t)}{P_0} - 1 \right] = \eta P(t-T) \qquad (1)$$

Le chaos obtenu et l'équation (1) qui le régit sont différents du modèle présenté dans le brevet déjà cité FR 2 477 459 dans lequel le chaos doit obéir à une équation du type :

$$P(t) + \tau \frac{d}{dt} P(t) = \pi \left[ A - \mu \sin^2 \{ MP(t-T) \} \right] \qquad (2)$$

Ceci rend impossible l'utilisation de la méthode simple de cryptage qui y est décrite.

Une méthode beaucoup plus complexe, déjà connue, peut être utilisée.

Cette solution permettant d'assurer le décryptage du chaos régi par l'équation (1) est celle qui est illustrée sur la figure 2. Elle repose sur la méthode de synchronisation de deux chaos décrite par Pecora et Caroll dans le document "synchronization in chaotic systems" publié dans Physical Review Letters, vol. 64, pp 821-824 en 1990. L'émetteur 6 est constitué par un générateur de chaos qui est lui-même formé de deux sous-ensembles couplés entre eux, un générateur de chaos maître 7, et un générateur de chaos esclave 8. Le générateur-maître génère un chaos qui est illustré pour piloter le chaos du générateur esclave. Le message à crypter s(t) est codé (sous forme généralement d'une simple addition) sur le chaos esclave qui se comporte comme un bruit de brouillage. L'ensemble est transmis au récepteur 9. Celui-ci comprend un générateur esclave 10 (identique au générateur esclave de l'émetteur), piloté par le signal de synchronisation provenant du générateur maître de l'émetteur. Quand les chaos des générateurs sont synchronisés, le message s(t) peut être récupéré par soustraction. On remarque que cette méthode nécessite généralement deux canaux de transmission 11 et 12, l'un pour le signal crypté, l'autre pour la synchronisation.

Un exemple de réalisation dans le domaine optique a été exposé par P Celka dans l'article déjà cité "chaotic synchronization and modulation of nonlinear time-delayed systems" paru dans IEEE Transactions on Circuits and Systems, vol. 42, numéro 8, pp 455-463 (août 1995). Le dispositif utilise une source de lumière monochromatique et plusieurs interféromètres de Mach-Zehnder pilotés par des boucles de contre-réaction à retard pour obtenir une synchronisation entre les chaos générés par l'émetteur et le récepteur.

La figure 3 illustre le système de cryptage et de décryptage proposé dans cet article et permet de préciser quelque peu le principe de fonctionnement. L'émetteur 13comprend deux générateurs de chaos 14, 15 réalisés suivant le principe exposé à la figure 1, couplés entre eux. Le récepteur 16 comprend deux modules 17 et 18, chacun d'entre eux étant constitués également par deux générateurs de chaos 19, 20 et 21, 22 convenablement appariés de façon à assurer la synchronisation. Chaque générateur de chaos est lui-même constitué par un interféromètre de Mach-Zehnder dont la sortie optique est rebouclée électriquement sur les électrodes de commande par une boucle de contre-réaction à retard, selon le mode de réalisation déjà illustré à la figure 1. On se reportera aux équations de base 1 à 4 et aux figures 1, 2, 6 et 12 de l'article de P. Celka pour une description complète du système et de son utilisation pour le cryptage de signaux numériques par commutation de chaos ("chaos shift keying" CSK).

Les dispositifs décrits précédemment présentent des inconvénients :

Pour ce qui est du dispositif décrit dans le brevet FR 2 743 459, le problème technique vient de la difficulté de satisfaire rigoureusement les conditions de longueur d'onde entre l'émetteur et le récepteur pour de grandes distances de transmission avec les fibres optiques utilisées en télécommunication (du fait de leur dispersion chromatique).

Pour résoudre ce problème, il faut utiliser des fibres à dispersion décalée, mais cette solution ne permet pas l'emploi de la plupart des réseaux existants.

Pour ce qui est du cryptage par chaos en intensité, les systèmes actuellement connus sont des générateurs de chaos dont les conditions d'utilisation conduisent à des systèmes très complexes et onéreux. Cette complexité induit notamment des difficultés techniques importantes pour réaliser des systèmes ayant de faibles constantes de temps adaptées à des vitesses de cryptage élevées, compatibles avec les débits de plusieurs Gbits/sec des télécommunications sur fibre optique. De plus, dans certains cas, la méthode de Pecora et Caroll nécessite un canal de transmission supplémentaire pour la synchronisation, ce qui est un désavantage en télécommunication.

Le but de la présente invention est justement de remédier à ces inconvénients.

L'invention propose quant à elle un dispositif pour l'émission d'un signal crypté comportant une source pour la génération dudit signal et des moyens pour la modulation de ce signal en intensité, une boucle de contre-réaction qui comporte des moyens formant ligne à retard et des moyens non linéaire,caractérisé en ce que cette boucle de contre-réaction comporte un interféromètre sur lequel est appliqué un courant électrique qui correspond au signal généré retardé et une source auxiliaire d'intensité constante qui alimente optiquement l'interféromètre, le signal en sortie de l'interféromètre étant une fonction non-linéaire du signal en sortie des moyens formant ligne à retard, une photodiode qui convertit en un courant de modulation la puissance lumineuse en sortie de l'interféromètre, un circuit sommateur qui additionne le message à crypter au courant de modulation en sortie de ladite photodiode, le signal en sortie de ce circuit sommateur étant utilisé pour la commande des moyens de modulation.

Avantageusement, la source pour la génération du signal est une source optique, ledit dispositif comportant une photodiode qui convertit le signal généré en un signal électrique, ainsi que des moyens pour injecter ce signal électrique en entrée des moyens formant ligne à retard.

Toutefois, le dispositif d'émission proposé par l'invention peut également être utilisé pour l'émission de signaux radiofréquences cryptés, la source pour la génération du signal étant alors une source radiofréquence.

L'invention propose également un dispositif pour la réception d'un signal crypté comportant des moyens de réception dudit signal, une boucle de contre-réaction qui comprend des moyens formant ligne à retard et des moyens non linéaire, caractérisé en ce que cette boucle de contre-réaction comporte un interféromètre sur lequel est appliqué un courant qui correspond au signal reçu retardé et une source auxiliaire d'intensité constante qui alimente optiquement l'interféromètre, le signal en sortie de l'interféromètre étant une fonction non-linéaire du signal en sortie des moyens formant ligne à retard, une photodiode qui convertit la puissance lumineuse en sortie de l'interféromètre en un courant, un circuit soustracteur, qui effectue la soustraction entre le signal reçu et le courant en sortie de ladite photodiode, le signal en sortie de ce circuit soustracteur étant le signal démodulé.

Dans le cas où le signal crypté est un signal optique, les moyens de réception sont constitués par une photodiode qui convertit la puissance lumineuse issue du canal de transmission en un signal électrique.

Dans le cas où le signal crypté est un signal radiofréquence, les moyens de réception comportent une antenne de réception.

De façon avantageuse, dans un dispositif d'émission ou de réception du type de ceux proposés par l'invention, l'interféromètre est de type Mach-Zehnder.

Préférentiellement, cet interféromètre de Mach-Zehnder est intégré sur niobate de lithium, sur arsénure de gallium, ou sur silicium.

D'autres caractéristiques et avantages de l'invention ressortiront encore de la description qui suit, qui est purement illustrative et non limitative et qui doit être lue en regard des dessins annexés sur lesquels :

- la figure 1, déjà analysée, est un schéma synoptique d'un générateur de chaos en intensité connu de l'état de la technique ;
- la figure 2, également déjà analysée, est un schéma synoptique d'un système de cryptage/décryptage par synchronisation de chaos connu de l'état de la technique ;
- la figure 3 est un schéma synoptique sur lequel on a illustré un exemple de réalisation d'un système de cryptage/décryptage par synchronisation de chaos proposé dans le domaine optique pour mettre en oeuvre les principes des systèmes illustrés sur les figures 1 et 2 ;
- la figure 4 est une représentation synoptique d'un dispositif d'émission conforme à un mode de réalisation possible de l'invention dans le cas d'une transmission optique ;
- la figure 5 est une représentation synoptique d'un système de réception conforme à un mode de réalisation possible de l'invention dans le cas d'une transmission optique ;
- les figures 6a et 6b sont des représentations synoptiques similaires à celles des figures 4 et 5, qui illustrent un dispositif d'émission et un dispositif de réception conformes à un mode de réalisation possible de l'invention dans le cas d'une transmission radiofréquence.

La technique de cryptage/décryptage qui est proposée par l'invention est destinée à être mise en oeuvre dans le cas de systèmes de transmission utilisant des sources optiques à modulation d'intensité, notamment des sources qui, par modulation interne, voient leur puissance d'émission modulée, ou encore des sources modulées de façon externe, par exemple par un modulateur d'intensité électro-optique, ou encore des diodes électroluminescentes.

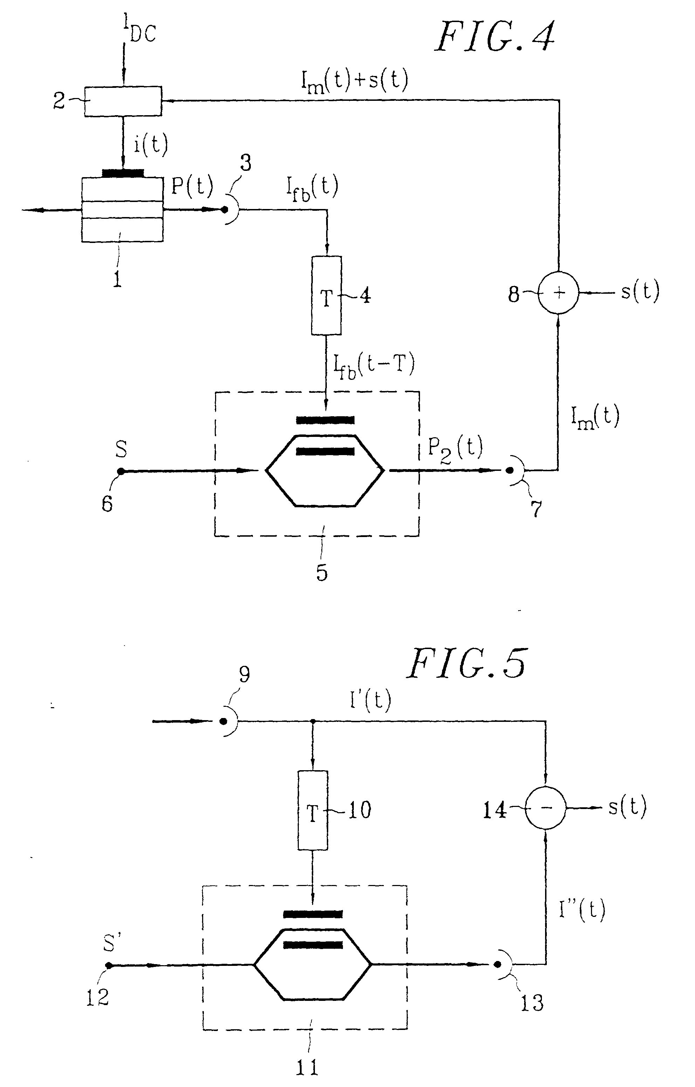

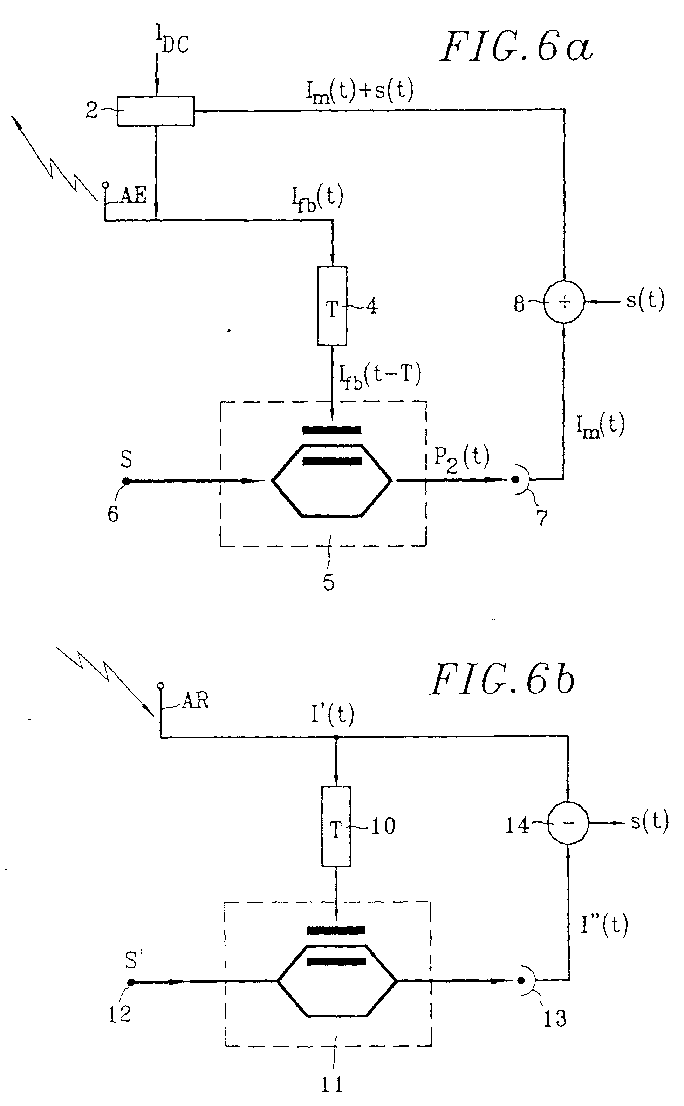

Le cryptosystème qui est illustré sur les figures 4 et 5 comprend un émetteur où s'effectue le cryptage du message s(t), un canal de transmission constitué par une fibre optique standard, et un récepteur où a lieu le décryptage.

a) L'émetteur (figure 4) comprend :

- une diode laser 1 émettant un faisceau lumineux dont la puissance d'émission peut être modulée de façon interne ou externe,
- un moyen de modulation 2 qui permet de moduler l'énergie $P_0$ émise par la diode laser proportionnellement au signal électrique de commande i(t) : la puissance lumineuse émise s'écrit P(t) = K i(t), K étant fixé par les paramètres de modulation. Ce moyen de modulation peut être également constitué par un modulateur externe placé à la sortie de la diode laser 1,
- une boucle de contre-réaction formée de :

  . d'une première photodiode 3 qui convertit P(t) en un signal électrique $I_{fb}(t)$, avec un facteur de conversion $\eta_1$
  . d'une ligne de retard 4 qui retarde $I_{fb}(t)$ d'un temps T
  . d'un interféromètre 5, par exemple de Mach-Zehnder intégré sur niobate de lithium, muni d'électrodes sur lesquelles est appliqué le signal retardé $I_{fb}(t-T)$
  . d'une source auxiliaire S 6 d'intensité constante $P_1$ (qui peut être une diode laser ou une diode électroluminescente) qui alimente optiquement l'interféromètre. Après traversée de l'interféromètre, la puissance de sortie $P_2$ est une fonction non linéaire NL du signal de commande $I_{fb}(t-T)$ :

$$P_2(t) = P_1 NL\left[I_{fb}(t-T)\right]$$

  . d'une seconde photodiode 7 qui convertit la puissance lumineuse $P_2(t)$ transmise par l'interféromètre en un courant de modulation $I_m(t)$ avec un facteur de conversion $\eta_2$. La relation qui lie ce courant $I_{m(t)}$ à la puissance optique P(t) s'écrit :

$$I_m(t) + \tau \frac{d}{dt} I_m(t) = \eta_2 P_1 NL\left[\eta_1 P(t-T)\right]$$

  où $\tau$ représente la constante de temps de la boucle de contre-réaction.

- un circuit sommateur 8 qui additionne le message à crypter s(t) au signal de modulation $I_m(t)$. Le signal composite $i(t) = I_m(t) + s(t)$ constitue le signal de commande du circuit de modulation 2. Finalement, l'intensité lumineuse P(t) de la diode laser est régie par une équation différentielle non linéaire à retard de la forme :

$$P(t) + \tau \frac{d}{dt} P(t) = \eta_2 P_1 NL\left[\eta_1 KP(t-T)\right] + s(t) + \tau \frac{d}{dt} s(t) \qquad (3)$$

Cette expression est une équation différentielle non linéaire à retard dont les solutions sont connues pour être, sous certaines conditions, des solutions chaotiques.

Le message s(t) est crypté à l'intérieur même des fluctuations chaotiques de l'intensité lumineuse de la source.

La fonction NL peut être avantageusement réalisée par exemple au moyen d'un interféromètre de Mach-Zehnder 5 intégré sur niobate de lithium caractérisé par une tension demi-onde $V_\pi$. On a alors :

$$P_2(t) = P_1 \cos^2\left[\frac{\pi}{2V'_\pi} I_{fb}(t-T) + \phi_0\right]$$

où $\phi_0$ est un déphasage arbitraire lié à un courant d'offset $I_0$ permettant d'optimiser le fonctionnement de l'interféromètre. Pour que la boucle de contre-réaction munie d'un tel interféromètre fonctionne comme un générateur de chaos de dimension élevée, il est nécessaire que la fonction NL présente plusieurs maxima et minima. Ceci est réalisé pour

$$\Delta I_{fb} >> 2V_\pi$$

où $\Delta I_{fb}$ représente la plage d'excursion du signal $I_{fb}(t)$. Celle-ci est facilement réglable par le biais du gain $\eta_1$ de l'élément 3. La particularité du système d'émission chaotique présentée ici réside dans le fait que la non linéarité est introduite au moyen d'un interféromètre alimenté optiquement par une source auxiliaire $S_1$ 6 et non par la source initiale 1 comme c'est le cas dans le générateur de chaos décrit à la figure 1. Ceci a pour conséquence que l'intensité lumineuse P(t) de la source 1, qui est transmise par fibre optique jusqu'au destinataire, code le message s(t) sous forme d'un chaos régi par l'équation (3).

L'avantage est de pouvoir alors utiliser un récepteur de conception très simple pour décrypter le message.

b) Le récepteur comprend

- un sous-ensemble qui constitue une réplique du circuit de contre-réaction utilisé dans l'émetteur, ce sous-ensemble comprend ;

  . une première photodiode 9 semblable 3 qui convertit la puissance lumineuse P(t) issue du canal de transmission en un signal électrique I'(t), avec un facteur de conversion $\eta_1$: I'(t) = $\eta_1$P(t) ;
  . une ligne à retard 10 qui retarde I'(t) d'un temps T ;
  . un interféromètre 11 identique à celui utilisé dans l'émetteur, sur lequel est appliqué le signal retardé I'(t-T) ;
  . une source auxiliaire S' 12 d'intensité constante $P_1$ qui alimente optiquement l'interféromètre pour donner, en sortie, une puissance

$$P'_2(t) = P'_1 NL[I'(t-T)] ;$$

  . une seconde photodiode 13, identique à 7, qui convertit $P'_2(t)$ en un courant I''(t). La relation qui lie ce courant I''(t) à la puissance optique P(t) s'écrit :

$$I''(t) + \tau\frac{d}{dt}I''(t) = \eta_2 P_1 NL\big[\eta_1 P(t-T)\big] \qquad (4)$$

où $\tau$ représente la constante de temps de ce sous-ensemble. En comparant les équations (3) et (4), on constate que I''(t) reproduit les fluctuations chaotiques de $I_m(t)$ sans que le message s(t) n'introduise aucune perturbation.

- un circuit soustracteur 14, qui effectue la soustraction entre le signal électrique d'entrée I'(t) du récepteur et celui I''(t), délivré par l'élément 13, en ajustant les gains sur chacune des entrées du soustracteur, pour obtenir un signal différence proportionnel au message s(t).

La réalisation de ce circuit de réception est simple et utilise des composants courants. On observera que ce procédé ne nécessite aucun canal de synchronisation supplémentaire entre l'émetteur et le récepteur.

c) Réalisation expérimentale.

La diode laser (1) utilisée est un laser à semi-conducteur de 1550 nm de longueur d'onde, de puissance nominale 5 mW et modulée de façon interne par le courant s(t) + Im(t) auquel on a superposé un courant d'offset $I_{DC}$ = 20mA (représenté sur la figure 4) de façon à opérer au delà du courant de seuil dans la partie linéaire de la courbe $P_o$=f(I) de la puce. La bande passante de la diode laser est de 10 GHz. La puissance émise par une facette de la puce est envoyée dans le canal de transmission. La photodiode 3 utilisée est celle intégrée par construction dans le boîtier du côté de l'autre facette de la puce laser. Ceci permet d'utiliser directement les diodes laser disponibles commercialement. Généralement, elle est associée à un amplificateur transimpédance dont le gain $\eta_1$ est réglable. La ligne à retard 4 introduit un retard T= 50ns, plus grand que la constante de temps $\tau$ =1ns de la boucle de contre-réaction.

L'interféromètre 5 dans la boucle de contre-réaction est un interféromètre de Mach-Zehnder intégré sur niobate de lithium de coupe Z, de tension demi-onde $V_\pi$ = 3V à la longueur d'onde de 1550 nm, et de bande passante 10 GHz. le gain $\eta_1$ de la photodiode 3 est ajusté de façon à ce que la tension de commande de l'interféromètre puisse atteindre des valeurs de l'ordre de $5V_\pi$ = 15V. Dans ces conditions, la tension de commande peut balayer 5 périodes de la fonction non linéaire NL, ce qui correspond à un chaos dont le paramètre de bifurcation $\beta$ est de l'ordre de 10. La dimension du chaos obtenu est d = 0.8 $\beta T/\tau$ = 400, ce qui correspond à un nombre d'exposants de Lyapunov positifs ou nuls de l'ordre de 200.

Ce procédé permet donc d'obtenir un nombre élevé d'exposants de Lyapunov positifs ou nuls par rapport à celui (de l'ordre de 3) généralement utilisé pour le cryptage de signaux dans les dispositifs connus, ce qui contribue à assurer un degré de confidentialité élevé.

La source auxiliaire S 6 éclairant l'interféromètre est une diode électroluminescente émettant une puissance lumineuse constante de 250mW. La photodiode 7, montée avec un amplificateur transimpédance dont le gain $\eta_2$ est réglable, délivre une tension de commande d'amplitude crête compatible avec le circuit de modulation 2 de la diode laser de façon à éviter toute saturation.

Dans ces conditions, la diode laser émet des fluctuations chaotiques de puissance moyenne 2mW et d'écart quadratique moyen 1mW. Le message s(t) à crypter est appliqué avec un niveau qui peut être de -10dB inférieur à celui de la tension délivrée par l'élément 7.

Le récepteur est réalisé à partir des mêmes éléments que ceux formant l'émetteur. Le gain $\eta_2$ de la photodiode 9 est ajusté de façon à ce que la tension de commande de l'interféromètre 11 soit la même que celle de l'interféromètre 5. Chaque entrée du soustracteur 14 est réglé avec un gain tel que le signal de sortie du soustracteur soit nul quand aucun message s(t) n'est transmis.

Les dispositifs d'émission et de réception qui viennent d'être décrits dans le cas de transmissions optiques se transposent aisément à des transmissions radioélectriques.

Des dispositifs d'émission et de réception en ce sens ont été créés sur les figures 6a et 6b.

Ces dispositifs sont analogues à ceux décrits précédemment en référence aux figures 4 et 5, aux différences près suivantes.

Dans le dispositif d'émission, la diode laser 1 et la photodiode 3 ont été supprimées.

La sortie de l'élément modulateur 2 est directement reliée à l'entrée de la ligne à retard 4.

Cette sortie, qui correspond au signal chaotique d'hyperfréquence P(t), est appliquée sur une antenne d'émission AE.

Dans le dispositif de réception, la photodiode 9 est remplacée par une antenne de réception AR.

**Revendications**

**1.** Dispositif pour l'émission d'un signal crypté comportant :

- une source (1) pour la génération dudit signal et des moyens (2) pour la modulation de ce signal en intensité,
- une boucle de contre-réaction qui comporte des moyens formant ligne à retard et des moyens non linéaires,

**caractérisé en ce que** cette boucle de contre-réaction comporte :

- un interféromètre (5) sur lequel est appliqué un courant électrique qui correspond au signal généré retardé et une source auxiliaire d'intensité constante qui alimente optiquement l'interféromètre, le signal en sortie de l'interféromètre étant une fonction non-linéaire du signal en sortie des moyens formant ligne à retard,
- une photodiode (7) qui convertit en un courant de modulation la puissance lumineuse en sortie de l'interféromètre,
- un circuit sommateur (8) qui additionne le message à crypter au courant de modulation en sortie de ladite photodiode, le signal en sortie de ce circuit sommateur étant utilisé pour la commande des moyens de modulation.

**2.** Dispositif selon la revendication 1, **caractérisé en ce que** la source (1) pour la génération du signal est une source optique, ledit dispositif comportant une photodiode qui convertit le signal généré en un signal électrique, ainsi que des moyens pour injecter ce signal électrique en entrée des moyens formant ligne à retard.

**3.** Dispositif selon la revendication 2, **caractérisé en ce que** les moyens de modulation sont internes à la source d'émission du signal optique.

**4.** Dispositif selon la revendication 2, **caractérisé en ce que** les moyens de modulation sont externes à la source d'émission du signal optique.

**5.** Dispositif selon la revendication 1, **caractérisé en ce que** la source pour la génération du signal est une source radiofréquence

**6.** Dispositif pour la réception d'un signal crypté comportant

- des moyens (9) de réception dudit signal,
- une boucle de contre-réaction qui comprend des moyens formant ligne à retard et des moyens non linéaires,

**caractérisé en ce que** cette boucle de contre-réaction comporte :

- un interféromètre (11) sur lequel est appliqué un courant qui correspond au signal reçu retardé et une source auxiliaire d'intensité constante qui alimente optiquement l'interféromètre, le signal en sortie de l'interféromètre étant une fonction non-linéaire du signal en sortie des moyens formant ligne à retard,
- une photodiode (13) qui convertit la puissance lumineuse en sortie de l'interféromètre en un courant,
- un circuit soustracteur (14), qui effectue la soustraction entre le signal reçu et le courant en sortie de ladite photodiode, le signal en sortie de ce circuit soustracteur étant le signal démodulé.

**7.** Dispositif selon la revendication 6, **caractérisé en ce que** le signal crypté étant un signal optique, les moyens de réception sont constitués par une photodiode (9) qui convertit la puissance lumineuse issue du canal de transmission en un signal électrique.

**8.** Dispositif selon la revendication 6, **caractérisé en ce que** le signal crypté étant un signal radiofréquence, les moyens de réception comportent une antenne de réception.

**9.** Dispositif selon l'une des revendications précédentes, **caractérisé en ce que** l'interféromètre (5) est de type Mach-Zehnder.

**10.** Dispositif selon la revendication 9, **caractérisé en ce que** l'interféromètre de Mach-Zehnder (5) est intégré sur niobate de lithium, sur arséniure de gallium, ou sur silicium.


**Claims**

**1.** A device for sending an encrypted signal, including:

- a source (1) for generating said signal and means (2) for intensity modulating said signal,
- a feedback loop that includes delay line means and non-linear means,

**characterized in that** said feedback loop includes:

- an interferometer (5) to which is applied an electrical current that corresponds to the delayed generated signal and a constant current auxiliary source which feeds the interferometer optically, the output signal of the interferometer being a non-linear function of the output signal of the delay line means,
- a photodiode (7) that converts the luminous power at the output of the interferometer to a modulation current, and
- a summing circuit (8) which adds the message to be encrypted to the modulation current at the output of said photodiode, the output signal of said summing circuit controlling modulator means.

**2.** A device according to claim 1, **characterized in that** the source (1) for generating the signal is an optical source and said device includes a photodiode which converts the generated signal into an electrical signal and means for injecting said electrical signal into the input of the delay line means.

**3.** A device according to claim 2, **characterized in that** the modulator means are internal to the source emitting the optical signal.

**4.** A device according to claim 2, **characterized in that** the modulator means are external to the source emitting the optical signal.

**5.** A device according to claim 1, **characterized in that** the source for generating the signal is a radio-frequency source.

**6.** A device for receiving an encrypted signal, including:

- means (9) for receiving said signal,
- a feedback loop that includes delay line means and non-linear means,

**characterized in that** said feedback loop includes:

- an interferometer (11) to which is applied a current that corresponds to the delayed received signal and a constant current auxiliary source that feeds the interferometer optically, the interferometer output signal being a non-linear function of the output signal of the delay line means,
- a photodiode (13) which converts the luminous power at the output of the interferometer into a current, and
- a subtractor circuit (14) which applies the subtraction operation to the received signal and to the output current of said photodiode, the output signal of said subtractor circuit being the demodulated signal.

**7.** A device according to claim 6, **characterized in that** the encrypted signal is an optical signal and the receiver means comprise a photodiode (9) that converts the luminous power from the transmission channel into an electrical signal.

**8.** A device according to claim 6, **characterized in that** the encrypted signal is a radio-frequency signal and the receiver means include a receive antenna.

**9.** A device according to any preceding claim,
**characterized in that** the interferometer (5) is a Mach-Zehnder interferometer.

**10.** A device according to claim 9, **characterized in that** the Mach-Zehnder interferometer (5) is integrated on lithium niobate, on gallium arsenide or on silicon.

**Patentansprüche**

**1.** Vorrichtung für die Emission eines verschlüsselten Signals, die folgendes umfaßt:

- eine Quelle (1) für die Erzeugung des Signals und Mittel (2) für die Modulation dieses Signals in der Intensität,
- eine Gegenkopplungsschleife, welche eine Verzögerungsleitung bildende Mittel und nicht-lineare Mittel aufweist,

**dadurch gekennzeichnet, daß** die Gegenkopplungsschleife folgendes umfaßt:

- ein Interferometer (5), an das ein elektrischer Strom, der dem verzögerten, erzeugten Signal entspricht, und eine Hilfsquelle konstanter Intensität angelegt wird, die das Interferometer optisch versorgt, wobei das Signal am Ausgang des Interferometers eine nicht-lineare Funktion des Signals am Ausgang der die Verzögerungsleitung bildenden Mittel ist,
- eine Photodiode (7), die die Lichtleistung am Ausgang des Interferometers in einen Modulationsstrom umwandelt,
- eine Additionsschaltung (8), welche die zu verschlüsselnde Nachricht zu dem Modulationsstrom am Ausgang der Photodiode addiert, wobei das Signal am Ausgang dieser Additionsschaltung für die Steuerung der Modulationsmittel verwendet wird.

2. Vorrichtung nach Anspruch 1, **dadurch gekennzeichnet, daß** die Quelle (1) für die Erzeugung des Signals eine optische Quelle ist, die Vorrichtung eine Photodiode, die das erzeugte Signal in ein elektrisches Signal umwandelt, sowie Mittel zum Injizieren dieses elektrischen Signals am Eingang der die Verzögerungsleitung bildenden Mittel umfaßt.

3. Vorrichtung nach Anspruch 2, **dadurch gekennzeichnet, daß** die Modulationsmittel innerhalb der Emissionsquelle des optischen Signals vorliegen.

4. Vorrichtung nach Anspruch 2, **dadurch gekennzeichnet, daß** die Modulationsmittel außerhalb der Emissionsquelle des optischen Signals vorliegen.

5. Vorrichtung nach Anspruch 1, **dadurch gekennzeichnet, daß** die Quelle für die Erzeugung des Signals eine Hochfrequenzquelle ist.

6. Vorrichtung für den Empfang eines verschlüsselten Signals, die folgendes umfaßt:

   - Mittel (9) zum Empfangen des Signals,
   - eine Gegenkopplungsschleife, welche eine Verzögerungsleitung bildende Mittel und nicht-lineare Mittel umfaßt,

   **dadurch gekennzeichnet, daß** die Gegenkopplungsschleife folgendes umfaßt:

   - ein Interferometer (11), an das ein Strom, der dem verzögerten, empfangenen Signal entspricht, und eine Hilfsquelle konstanter Intensität angelegt wird, die das Interferometer optisch versorgt, wobei das Signal am Ausgang des Interferometers eine nicht-lineare Funktion des Signals am Ausgang der die Verzögerungsleitung bildenden Mittel ist,
   - eine Photodiode (13), welche die Lichtleistung am Ausgang des Interferometers in einen Strom umwandelt,
   - eine Subtrahierschaltung (14), welche eine Subtraktion zwischen dem empfangenen Signal und dem Strom am Ausgang der Photodiode durchführt, wobei das Signal am Ausgang dieser Subtrahierschaltung das demodulierte Signal ist.

7. Vorrichtung nach Anspruch 6, **dadurch gekennzeichnet, daß** das verschlüsselte Signal ein optisches Signal ist, die Empfangsmittel durch eine Photodiode (9) gebildet werden, welche die vom Übertragungskanal ausgegebene Lichtleistung in ein elektrisches Signal umwandelt.

8. Vorrichtung nach Anspruch 6, **dadurch gekennzeichnet, daß** das verschlüsselte Signal ein Hochfrequenzsignal ist, und die Empfangsmittel eine Empfangsantenne aufweisen.

9. Vorrichtung nach einem der vorhergehenden Ansprüche, **dadurch gekennzeichnet, daß** das Interferometer (5) vom Mach-Zehnder-Typ ist.

10. Vorrichtung nach Anspruch 9, **dadurch gekennzeichnet, daß** das Mach-Zehnder-Interferometer (5) auf Lithiumniobat, auf Galliumarsenid, oder auf Silizium integriert ist.

*FIG.1*

$I_{DC}$

1

2

3

P(t)

4

5

T

*FIG.2*

s(t)

s(t)

8

12

6

7

11

9

10

*FIG.3*

13

15

14

s(t)

21

18

16

22

17

19

20

s(t)
bit 1

s(t)
bit 0

*FIG.4*

*FIG.5*

*FIG.6a*

*FIG.6b*